# EUROPEAN PATENT APPLICATION

(11) **EP 4 566 996 A1**
(43) Date of publication of application: **11.06.2025**
(21) Application number: 24216939.9
(22) Date of filing: 02.12.2024
(51) Int. Cl.: C01G 23/00, B01J 21/06

(54) **METHOD FOR PRODUCING Y2TI2O5S2**

(30) Priority: 07.12.2023 JP 2023206722
(71) Applicant: Shin-Etsu Chemical Co., Ltd., Chiyoda-ku, Tokyo 1000005 (JP); Shinshu University, Matsumoto City Nagano 390-8621 (JP)
(72) Inventor: SAITO, Daiki, Echizen-shi 9158515 (JP); HISATOMI, Takashi, Nagano 3808553 (JP); DOMEN, Kazunari, Nagano 3808553 (JP)
(74) Representative: Mewburn Ellis LLP

(57) **Abstract**

A method for producing Y₂Ti₂O₅S₂, including: placing sulfur, Y₂O₃, TiO₂, Y₂S₃, and at least one flux selected from a halide of an alkali metal in a lower portion of a reaction vessel having an opening at an upper end; then vaporizing the sulfur and allowing the vaporized sulfur to react with Y₂O₃, TiO₂, and Y₂S₃ to obtain Y₂Ti₂O₅S₂ by heating the lower portion of the reaction vessel in a state where the opening of the reaction vessel is held upward and closed while an upper portion of the reaction vessel is not heated; and liquefying the vaporized sulfur in the upper portion of the reaction vessel to allow the liquefied sulfur to fall down and again vaporizing the liquefied sulfur in the heated lower portion of the reaction vessel, in which liquefaction and vaporization are repeatedly carried out, and allowing the vaporized sulfur to react with Y₂O₃, TiO₂, and Y₂S₃ to obtain Y₂Ti₂O₅S₂.

## Description

### TECHNICAL FIELD

This invention relates to a method for producing Y₂Ti₂O₅S₂ used as a photocatalyst.

### BACKGROUND

In recent years, from the viewpoint of preventing global warming and moving away from the dependence on depleting fossil resources, photocatalyst which produce hydrogen only by solar energy and water has attracted great attention and its social demand is increasing.

Photocatalytic water splitting reactions have been widely studied for many years. For example, the water splitting reaction of photocatalysts in acidic aqueous solutions has been estimated as follows

H₂O + 2h⁺ → 1/2O₂ + 2H⁺

2H⁺ + 2e⁻ → H₂

Previously, TiO₂ doped with transition metals such as Cr and V have been proposed as a photocatalytic material, but recently Y₂Ti₂O₅S₂ has been found as a photocatalyst with excellent photocatalytic activity.

As a method for producing Y₂Ti₂O₅S₂, an evacuated sealed tube method and a hydrogen sulfide method have already been applied (Patent Documents 1 to 4).

The evacuated sealed tube method is a method in which Y₂O₃, TiO₂, and Y₂S₃ in a powder form are weighed so as to form Y₂Ti₂O₅S₂ at a stoichiometric ratio, sulfur (S) is further added, a mixture thereof is then placed in a quartz tube and vacuum-sealed, and this mixture is heated at a temperature of about 750°C for about 96 hours to obtain a compound of Y₂Ti₂O₅S₂.

In the hydrogen sulfide method, Y₂O₃, TiO₂, and Y₂S₃ powders are weighed and mixed to obtain a stoichiometric ratio of Y₂Ti₂O₅S₂, placed in the center of a quartz tube, and heated at about 1100°C for about 3 hours with hydrogen sulfide gas flowing. In this method, since synthesis is performed under hydrogen sulfide gas, the remaining oxygen becomes water (H₂O) which has the advantage of reducing the effect of oxygen during synthesis.

Y₂Ti₂O₅S₂ can also be synthesized by the methods described above by adding halides that act as flux to the starting material mixture.

### Citation List

Patent Document 1: WO 2023/113019
Patent Document 2: JP-A 2023-58296
Patent Document 3: JP-A 2020-138188
Patent Document 4: JP-A 2014-110172
Patent Document 5: JP-A 2021-118030

### SUMMARY OF THE INVENTION

However, in the evacuated sealed tube method, since it is necessary to vacuum-seal the quartz tube, a large amount of synthesis cannot be performed at a time, and there is a risk of rupture due to an increase of internal pressure. In the hydrogen sulfide method, a large amount of synthesis is possible, but since toxic hydrogen sulfide gas is used, there is a problem in safety. On the other hand, in the synthesis of a compound using sulfur as a starting material, a method using sulfur vapor has also been proposed (Patent Document 5), but there are no reports on synthesis of Y₂Ti₂O₅S₂.

An object of the invention is to provide a method for producing a large amount of Y₂Ti₂O₅S₂ in a safe manner without using toxic hydrogen sulfide gas.

The inventors have found that a large amount of Y₂Ti₂O₅S₂ can be produced safely without using toxic hydrogen sulfide gas by placing sulfur, Y₂O₃, TiO₂, Y₂S₃, and at least one flux selected from a halide of an alkali metal in a lower portion of a reaction vessel having an opening at an upper end; then vaporizing the sulfur and allowing the vaporized sulfur to react with Y₂O₃, TiO₂, and Y₂S₃ to obtain Y₂Ti₂O₅S₂ by heating the lower portion of the reaction vessel in a state where the opening of the reaction vessel is held upward and closed while an upper portion of the reaction vessel is not heated; and liquefying the vaporized sulfur in the upper portion of the reaction vessel to allow the liquefied sulfur to fall down and again vaporizing the liquefied sulfur in the heated lower portion of the reaction vessel, in which liquefaction and vaporization are repeatedly carried out, and allowing the vaporized sulfur to react with Y₂O₃, TiO₂, and Y₂S₃ to obtain Y₂Ti₂O₅S₂.

This invention provides a method for producing Y₂Ti₂O₅S₂, including:
placing sulfur, Y₂O₃, TiO₂, Y₂S₃, and at least one flux selected from a halide of an alkali metal in a lower portion of a reaction vessel having an opening at an upper end;
then vaporizing the sulfur and allowing the vaporized sulfur to react with Y₂O₃, TiO₂, and Y₂S₃ to obtain Y₂Ti₂O₅S₂ by heating the lower portion of the reaction vessel in a state where the opening of the reaction vessel is held upward and closed while an upper portion of the reaction vessel is not heated; and
liquefying the vaporized sulfur in the upper portion of the reaction vessel to allow the liquefied sulfur to fall down and again vaporizing the liquefied sulfur in the heated lower portion of the reaction vessel, in which liquefaction and vaporization are repeatedly carried out, and allowing the vaporized sulfur to react with Y₂O₃, TiO₂, and Y₂S₃ to obtain Y₂Ti₂O₅S₂.

In a preferred embodiment, the lower portion of the reaction vessel is heated and the upper portion of the reaction vessel is maintained at a temperature lower than a boiling point of the sulfur, whereby the vaporized sulfur is cooled and liquefied in the upper portion of the reaction vessel, and the liquefied sulfur spontaneously falls to the lower portion of the reaction vessel.

Preferably, the heating temperature is 600 to 1,100°C.

In a more preferred embodiment, the sulfur is placed in the lower portion of the reaction vessel, while Y₂O₃, TiO₂, Y₂S₃ and the flux are mixed and provided in a starting material storage container, and the container is placed in the reaction vessel to perform the reaction.

Also preferably, the flux is at least one selected from NaCl, NaBr, NaI, KCI, KBr, KI, CsCl, CsBr, and CsI.

### ADVANTAGEOUS EFFECTS

It is possible to synthesize a large amount of Y₂Ti₂O₅S₂ at a time more easily and safely without using hydrogen sulfide gas. The synthesis can be carried out in a shorter time than before.

### BRIEF DESCRIPTION OF THE DRAWINGS

FIGS. 1A and 1B are schematic views of a reactor used in one embodiment of a production method of the invention, in which FIG. 1A shows a state before heating and FIG. 1B shows a state during a heat-reacting.
FIGS. 2A and 2B are schematic views of another reactor used in one embodiment of a production method of the invention, in which FIG. 2A shows a state before heating and FIG. 2B shows a state during a heat-reacting.
FIG. 3 is a view showing an X-ray diffraction profile of Y₂Ti₂O₅S₂ obtained in Example 2.
FIG. 4 is a schematic view of a reactor used in Comparative Example 1.

### FURTHER EXPLANATIONS; OPTIONS AND PREFERENCES

The production method of the invention includes placing sulfur, Y₂O₃, TiO₂, Y₂S₃, and at least one flux selected from a halide of an alkali metal in a lower portion of a reaction vessel having an opening at an upper end; then vaporizing the sulfur and allowing the vaporized sulfur to react with Y₂O₃, TiO₂, and Y₂S₃ to obtain Y₂Ti₂O₅S₂ by heating the lower portion of the reaction vessel in a state where the opening of the reaction vessel is held upward and closed while an upper portion of the reaction vessel is not heated; and liquefying the vaporized sulfur in the upper portion of the reaction vessel to allow the liquefied sulfur to fall down and again vaporizing the liquefied sulfur in the heated lower portion of the reaction vessel, in which liquefaction and vaporization are repeatedly carried out, and allowing the vaporized sulfur to react with Y₂O₃, TiO₂, and Y₂S₃ to obtain Y₂Ti₂O₅S₂.

Hereinafter, an embodiment of the invention will be described with reference to the drawings.

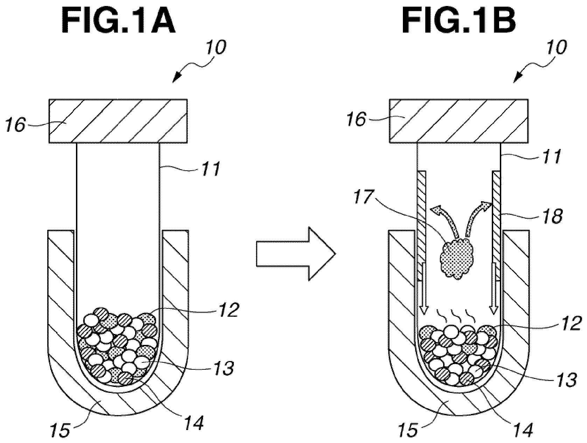

FIGS. 1A and 1B show schematic views of a reactor 10 used in one embodiment of a production method of the invention, and FIG. 1A shows a state before heating, and FIG. 1B shows a state during heat-reacting.

In this embodiment, first, as shown in FIG. 1A, sulfur 12, and Y₂O₃, TiO₂, and Y₂S₃ (hereinafter, these may be collectively referred to as "synthesis starting materials other than sulfur") 13, and a flux 14 are placed in a lower portion of a reaction vessel 11.

### Sulfur

The form of the sulfur used in the invention is not particularly limited, and examples thereof include a powder form and a lump form, and any of crystal and amorphous forms, and the like can be used. Of these, a powder is preferable from the viewpoint of reactivity.

The amount of the sulfur used in the invention is also not particularly limited, and the molar ratio of Y₂O₃ to sulfur (Y₂O₃/S) is preferably 10/1 to 1/1000, more preferably 1/1 to 1/100, still more preferably 1/30 to 1/100. If the amount of the sulfur is too large, it may take time to recover a reaction product, and if the amount is too small, a sulfurization reaction may not proceed.

### Y₂O₃, TiO₂, and Y₂S₃

The forms of Y₂O₃, TiO₂, and Y₂S₃ are also not particularly limited, and examples thereof include a powder form and a lump form, but a powder is preferable from the viewpoint of reactivity.

The amounts of Y₂O₃, TiO₂, and Y₂S₃ used are also not particularly limited, and the molar ratio of Y₂O₃/TiO₂/Y₂S₃ is preferably 1/1/1 to 1/10/5, more preferably 1/1/1 to 1/8/3.

### Flux

In the invention, in order to obtain Y₂Ti₂O₅S₂ as a single substance or to increase the amount thereof, it is necessary to add a substance to serve as a flux together with Y₂O₃, TiO₂, and Y₂S₃ as starting materials.

The flux is not particularly limited, and those commonly used for synthesis of Y₂Ti₂O₅S₂ can be used. Examples thereof include halides of alkali metals. Specific examples thereof include NaCl, NaBr, NaI, KCI, KBr, KI, RbCl, RbBr, RbI, CsF, CsCl, CsBr, and CsI. Among these, NaCl, NaBr, NaI, KCl, KBr, KI, CsCl, CsBr, and CsI are preferable. These may be used alone or in admixture of two or more.

The forms of the flux are also not particularly limited, and examples thereof include a powder form and a lump form. Of these, a powder is preferable from the viewpoint of reactivity.

The amount of the flux added is also not particularly limited, and is preferably 1 to 300% by weight, more preferably 1 to 200% by weight, still more preferably 3 to 150% by weight, and particularly preferably 5 to 150% by weight of the total amount of Y₂O₃, TiO₂, and Y₂S₃ as starting materials. If the amount is more than 300% by weight, Y₂Ti₂O₇ may be a principal component as a product, and if the amount is less than 1% by weight, the starting materials may not be completely dissolved in the flux during reaction heating, and the starting materials may become unreacted.

Sulfur, Y₂O₃, TiO₂, Y₂S₃, and the flux can all be mixed and then placed in the reaction vessel.

A mixing method is not particularly limited and may be performed by a method usually used for synthesis of Y₂Ti₂O₅S₂, but in order to avoid generation of impurities such as an oxide phase during the synthesis reaction, the mixing is preferably performed in an inert gas atmosphere such as nitrogen, argon, or the like.

These starting materials may be separately placed in the reaction vessel, or for example, only the sulfur may be placed first, and then a mixture obtained by mixing Y₂O₃, TiO₂, Y₂S₃ and the flux may be placed. This is preferable because the sulfur and the product are not mixed, so that the product is easily recovered, and the sulfur can be reused.

### Reaction vessel

As the reaction vessel, for example, as shown in FIGS. 1A and 1B, a reaction vessel having an opening at an upper end and formed in a bottomed cylindrical shape can be used.

In the invention, when a reaction is performed, the reaction vessel is, for example, installed inside a heating device such as a heat treatment furnace such that the lower portion of the reaction vessel is disposed inside a heating device while the upper portion of the reaction vessel is disposed outside the heating device, and the lower portion of the reaction vessel is heated while the upper portion of the reaction vessel is maintained at a temperature lower than the boiling point of the sulfur without being heated, so that the sulfur is heated and vaporized in the lower portion of the reaction vessel, and the vaporized sulfur is spontaneously cooled and liquefied at a wall surface or the like of the upper portion of the reaction vessel. The liquefied sulfur spontaneously falls from the upper portion to the lower portion of the reaction vessel, for example, falls down the side wall of the reaction vessel, and is heated in the lower portion of the reaction vessel and vaporized again. In order to allow the vaporized sulfur to react with Y₂O₃, TiO₂, and Y₂S₃ during heating in a state where vaporization and liquefaction of the sulfur are repeated, the entire size of the reaction vessel is not particularly limited, but it is preferable that the reaction vessel has a height sufficient for the vaporized sulfur to be cooled and liquefied in the upper portion of the reaction vessel. The height of the reaction vessel is, for example, preferably 10 to 500 mm, more preferably 15 to 300 mm, and still more preferably 100 to 300 mm although depending on the type of heating device and heating conditions.

When the diameter (inner diameter) of the reaction vessel is too small, the liquefied sulfur is less likely to fall from the upper portion to the lower portion of the reaction vessel due to a capillary phenomenon or the like, and thus the diameter is, for example, preferably 5 to 500 mm, more preferably 10 to 200 mm, and still more preferably 10 to 100 mm.

The material of the reaction vessel is also not particularly limited, but is preferably one that has heat resistance and does not react with the sulfur. Examples thereof include glass such as quartz, borosilicate glass, crystallized glass, and soda lime glass; ceramics such as alumina. Among these, quartz is more preferable.

In this embodiment, a bottomed cylindrical reaction vessel is used, but the reaction vessel may have any shape as long as the reaction vessel has an opening through which a synthesis starting material can be taken in and out, and can store a synthesis starting material therein, and the sulfur vaporized in the lower portion of the vessel can be liquefied in the upper portion of the vessel and fall to the lower portion. In addition to the bottomed cylindrical shape, for example, a bottomed elliptical cylindrical shape, a bottomed square tubular shape, a bottomed cylindrical shape with the upper end open and having a spherical portion at the lower end (round bottom flask shape), a bottomed cylindrical shape with the upper end open and having a conical portion at the lower end (triangular flask shape), a bottomed conical shape with the upper end open, a bottomed pyramidal shape with the upper end open, or the like can also be used. However, from the viewpoint that the sulfur liquefied in the upper portion of the vessel is likely to fall to the lower portion of the vessel, those having a cylindrical or tubular shape are preferable, and those having a cross section perpendicular to the length direction of the cylindrical or tubular portion with a circular or elliptical shape are preferable.

The upper portion of the reaction vessel is disposed outside the heating device, and is maintained at a temperature lower than the boiling point of the sulfur during the reaction if the upper portion is not heated at room temperature (25°C). However, in order to liquefy the vaporized sulfur as quickly as possible, a cooling unit such as a cooling fin may be provided in a part of the upper portion or the like of the reaction vessel.

Subsequently, the opening of the reaction vessel 11 is held upward, and as shown in, for example, FIGS. 1A and 1B, the lower portion of the reaction vessel 11 is disposed in the heating device 15, the upper portion of the reaction vessel 11 is disposed outside the heating device 15, and the opening is closed with a plug 16, and power is supplied to the heating device 15 from a power supply source (not shown) to heat the lower portion of the reaction vessel 11 in a state where the upper portion of the reaction vessel 11 is not heated. Even when the opening of the reaction vessel is closed and sealed, the internal pressure is not excessively increased due to liquefaction of the sulfur, and thus the risk of rupture is lower than that in the case of vacuum. The opening at the upper end of the reaction vessel may be opened without being closed.

### Heating conditions

The heating temperature is not particularly limited, but is preferably 600 to 1,100°C, more preferably 700 to 1,100°C, still more preferably higher than 700°C and 1,100°C or lower, and even more preferably 750 to 1,000°C. If the temperature is higher than 1,100°C, the flux may evaporate to produce Y₂Ti₂O₇. If the temperature is lower than 600°C, the synthesis reaction may not occur.

The heating time is also not particularly limited and varies depending on the total amount of the synthesis starting materials, and is preferably 5 minutes to 96 hours, more preferably 5 minutes to 10 hours, and still more preferably 5 minutes to 2 hours. If the time exceeds 96 hours, the synthesis reaction is completed, and thus unnecessary heating may be performed. If the time is less than 5 minutes, the synthesis reaction may not be completed.

The heating device is also not particularly limited and can be used by being appropriately selected from a heat treatment furnace and the like conventionally used according to the reaction vessel.

By heating the lower portion of the reaction vessel 11 in this manner, the sulfur is vaporized as shown in FIG. 1B, and the vaporized sulfur 17 and the synthesis starting material other than sulfur 13 react with each other, whereby Y₂Ti₂O₅S₂ can be obtained.

The vaporized sulfur 17 is spontaneously cooled and liquefied on the wall surface or the like of the upper portion of the reaction vessel 11 which is disposed outside the heating device 15, and therefore is not heated and is maintained at a temperature lower than the boiling point of the sulfur. The liquefied sulfur 18 falls from the upper portion to the lower portion of the reaction vessel 11, for example, falls down the side wall of the reaction vessel 11. The sulfur liquefied and fallen to the lower portion of the reaction vessel 11 is vaporized again in the heated lower portion of the reaction vessel 11, and the vaporized sulfur reacts with the synthesis starting material other than sulfur 13. This vaporization and liquefaction are repeated during the heating reaction.

The vaporized sulfur also reacts with oxygen in the reaction vessel, thereby preventing composition fluctuation due to oxidation during the synthesis reaction.

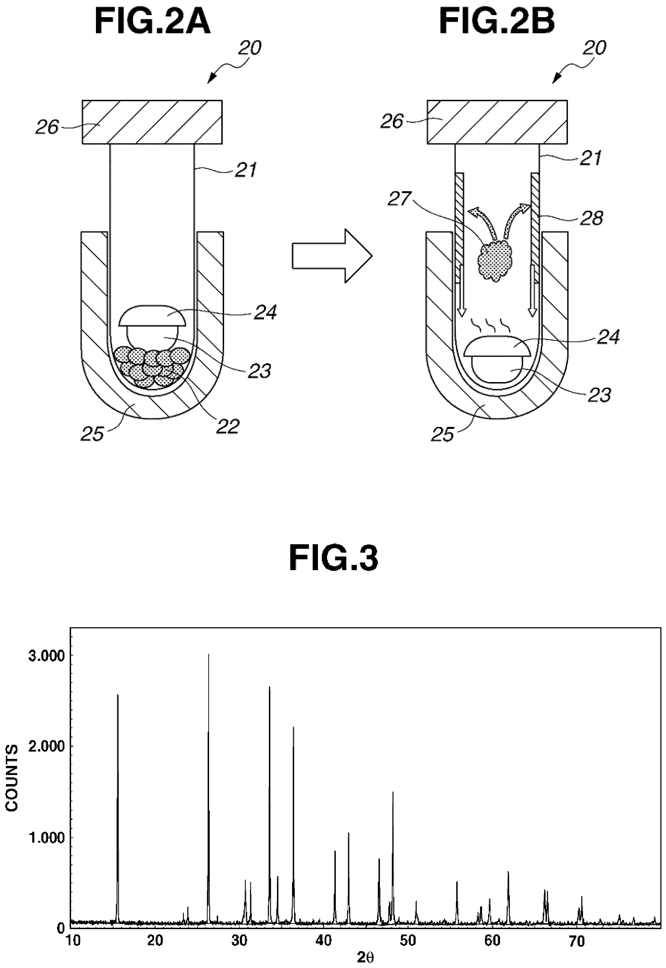

In the above embodiment, sulfur, Y₂O₃, TiO₂, Y₂S₃, and the flux are directly placed in the reaction vessel, but the production method of the invention is not limited thereto, and for example, the production method shown in FIGS. 2A and 2B may be used.

FIGS. 2A and 2B show schematic views of a reactor 20 used in another embodiment of the invention, and FIG. 2A shows a state before heating, and FIG. 2B shows a state during a heat-reacting.

In this method, the synthesis starting material other than sulfur is placed in a starting material storage container 23, and a reaction is performed. By placing the synthesis starting material other than sulfur in the starting material storage container, it is possible to prevent the liquefied sulfur at a low temperature from being mixed with the synthesis starting material other than sulfur, and thus, it is possible to prevent a decrease in the reaction temperature. Here, first, as shown in FIG. 2A, the sulfur 22 is placed in the lower portion of a reaction vessel 21.

Subsequently, Y₂O₃, TiO₂, and Y₂S₃ which are the synthesis starting material other than sulfur are mixed with the flux. The mixing method is the same as described above.

Next, the obtained mixture is placed in the starting material storage container 23, which is covered with a lid 24 having low sealability as necessary. The starting material storage container 23 is placed on the sulfur 22 in the lower portion of the reaction vessel 21. The reaction vessel 21 can be the same as described above, but it should be large enough to contain a starting material storage container.

Then, the opening of the reaction vessel is held upward, and for example, as shown in FIGS. 2A and 2B, the lower portion of the reaction vessel 21 is disposed in a heating device 25, and the upper portion of the reaction vessel 21 is disposed outside the heating device 25. When the opening is closed, it is closed with a plug 26, and power is supplied from a power supply source (not shown) to the heating device 25 to heat the lower portion of the reaction vessel 21 without heating the upper portion of the reaction vessel 21. The heating method and conditions are similar to those described above.

### Starting material storage container

Shapes and sizes of the starting material storage container and the lid are not particularly limited as long as the starting material storage container and the lid can be placed in the reaction vessel. The material of the starting material storage container is also not particularly limited. However, similar to the reaction vessel, a material that has heat resistance and does not react with sulfur is preferable, and for example, a ceramic such as alumina is preferable. It is preferable to perform synthesis using the starting material storage container also from the viewpoint that the obtained Y₂Ti₂O₅S₂ is easily recovered after completion of the reaction and that when there is unreacted sulfur, it is easily separated from the obtained Y₂Ti₂O₅S₂. As the starting material storage container, for example, a ceramic crucible or the like can be used.

In this embodiment, the starting material storage container is covered with a lid as necessary, but a lid may or may not be provided. Use of a lid can prevent volatilization of the flux. However, when a lid is used, it is preferable to use the one having a structure with low sealability so that the reaction is not inhibited.

By heating the lower portion of the reaction vessel 21 as described above, the sulfur is vaporized as shown in FIG. 2B, and the vaporized sulfur 27 reacts with Y₂O₃, TiO₂, and Y₂S₃ (not shown) in the starting material storage container 23, whereby Y₂Ti₂O₅S₂ can be obtained.

The vaporized sulfur 27 is cooled and liquefied on the wall surface or the like of the upper portion of the reaction vessel 21, which is disposed outside the heating device 25, and therefore is not heated. The liquefied sulfur 28 falls from the upper portion to the lower portion of the reaction vessel 21, for example, falls down the side wall of the reaction vessel 21. The sulfur liquefied and fallen to the lower portion of the reaction vessel 21 is vaporized again in the heated lower portion of the reaction vessel 21, and the vaporized sulfur reacts with Y₂O₃, TiO₂, and Y₂S₃ (not shown) in the starting material storage container 23.

In the invention, during the synthesis of Y₂Ti₂O₅S₂, the phenomenon of vaporization and liquefaction occurs continuously. That is, since the sulfur is refluxed in the reaction vessel, the sulfur can be reused. In addition, it has been found that the time required for synthesis can be shortened in the invention. The reason for this is not clear, but it can be presumed that this is because the sulfur at a high concentration always reacts with the synthesis starting materials Y₂O₃, TiO₂, and Y₂S₃ as compared with a conventional method. Furthermore, in the invention, Y₂Ti₂O₅S₂ can be directly synthesized from the starting material powder without requiring a step such as a pretreatment, and the reaction can be easily performed.

In each of the above embodiments, the opening of the reaction vessel is held upward when the reaction vessel is installed in the heating device, but the method for holding the reaction vessel is not particularly limited as long as the opening of the reaction vessel is held upward and the sulfur can be refluxed in the reaction vessel. And the vertical direction of the reaction vessel may be held perpendicular or inclined to the installation surface.

Also, even when the opening at the upper end of the reaction vessel is in an open state, Y₂Ti₂O₅S₂ can be obtained in the same manner as in the case of a closed state. When the opening at the upper end of the reaction vessel is opened, heating is preferably performed while an inert gas such as nitrogen or argon is allowed to flow. However, from the viewpoint of not releasing the vaporized sulfur, it is preferable that the opening of the reaction vessel is closed and sealed, preferably completely sealed.

### EXAMPLES

The invention will be specifically described with reference to Examples and Comparative Examples, although the invention is not limited by the following Examples. In the following Examples, X-ray diffraction (XRD) measurement was performed under the following conditions.

### <XRD measurement>

### Manufacturer: BRUKER

### Apparatus: D8 ADVANCE

### Measurement conditions:

- Radiation source: Cu-Kα
- Measurement range: 10 to 70°
- Measurement step: 1°
- Scan speed: 10°/min
- Analysis software: DIFFRAC. SUITE

### Example 1

Y₂O₃ powder (75 mg), 160 mg of TiO₂ powder, 183 mg of Y₂S₃ powder, and 0.6 g of sulfur powder were weighed and placed in a mortar, and further, 0.5 g of CsBr powder as a flux was placed in the mortar. Then, the mixture was stirred in a nitrogen atmosphere for 30 minutes to mix the powders. Subsequently, the reactor 10 shown in FIG. 1A was used, and the mixed powder was transferred to the bottom of a quartz tube 11 (inner diameter Φ10 mm × height 250 mm).

The opening at the upper end of the quartz tube 11 was covered with a rubber plug 16, the lower portion of the quartz tube 11 was inserted into the heat treatment furnace 15 and the quartz tube 11 was stood vertically. Power was supplied from a power supply source (not shown) to the heat treatment furnace 15, and the lower portion of the quartz tube 11 was heated at 850°C for 1 hour as shown in FIG. 1B.

The sulfur was vaporized by heating, and the vaporized sulfur was cooled and liquefied on the wall surface of the upper portion of the quartz tube. The liquefied sulfur fell to the lower portion of the quartz tube by flowing down the side wall to the lower portion of the quartz tube or by dropping as droplets from the upper portion of the quartz tube to fall to the lower portion of the quartz tube, and was heated in the lower portion of the quartz tube and vaporized again. This was continuously repeated during heating, and it was visually observed that the sulfur was refluxed in the quartz tube.

After completion of the heating, the quartz tube 11 was cooled, the powder in the quartz tube was taken out, the flux was washed away with water, and the product was recovered by filtration and then subjected to XRD measurement. As a result, Y₂Ti₂O₅S₂ was found and no other compounds were found.

### Example 2

Y₂O₃ powder (1.1 g), 2.3 g of TiO₂ powder, and 2.7 g of Y₂S₃ powder were weighed, and placed in a mortar, and further, 9 g of CsBr powder as a flux was placed in the mortar, and then the mixture was stirred in a nitrogen atmosphere for 30 minutes to mix the powders. Subsequently, the mixed powder was transferred to an alumina crucible (shape: type B, inner diameter Φ36 mm × height 31 mm, capacity 15 mL).

The reactor 20 shown in FIG. 2A was used, and 10 g of sulfur powder 22 was placed at the bottom of a quartz tube 21 (inner diameter Φ46 mm × height 250 mm), and then the alumina crucible 23 containing the mixed powder was covered with a lid 24 in an unsealed state, and placed in the quartz tube 21. The opening at the upper end of the quartz tube 21 was plugged with a rubber plug 26, the lower portion of the quartz tube 21 was inserted into a heat treatment furnace 25 and the quartz tube 21 was stood vertically. Power was supplied from a power supply source (not shown) to the heat treatment furnace 25, and the lower portion of the quartz tube 21 was heated at 850°C for 0.5 hours as shown in FIG. 2B.

The sulfur was vaporized by heating, and the vaporized sulfur was cooled and liquefied on the wall surface of the upper portion of the quartz tube. The liquefied sulfur fell to the lower portion of the quartz tube by flowing down the side wall to the lower portion of the quartz tube or by dropping as droplets from the upper portion of the quartz tube to fall to the lower portion of the quartz tube, and was heated in the lower portion of the quartz tube and vaporized again. This was continuously repeated during heating, and it was visually observed that the sulfur was refluxed in the quartz tube.

After completion of the heating, the quartz tube 21 was cooled, the powder in the crucible 23 was taken out, the flux was washed away with water, and the product was recovered by filtration and then subjected to XRD measurement. As a result, Y₂Ti₂O₅S₂ was found and no other compounds were found. The XRD measurement results are shown in FIG. 3.

### Comparative Example 1

In the same manner as in Example 2, powders of Y₂O₃, TiO₂, Y₂S₃, and a flux were mixed and transferred to an alumina crucible.

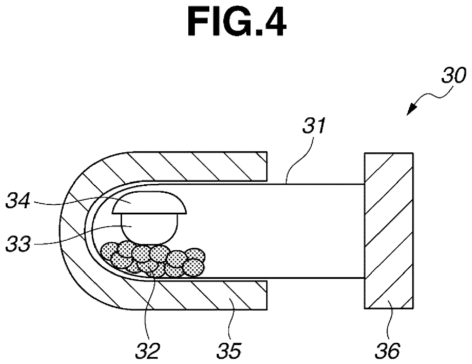

The reactor 30 shown in FIG. 4 was used, and 10 g of sulfur powder 32 was placed deep inside a quartz tube 31. The alumina crucible 33 containing the mixed powder was covered with a lid 34 in an unsealed state, and placed on the sulfur powder 32. The furthest part from the opening of the quartz tube 31 was inserted into a heat treatment furnace 35. The inside of the quartz tube 31 was evacuated, and then the opening was closed with a rubber plug 36.

The longitudinal direction of the quartz tube 31 was maintained in the horizontal direction. Power was supplied from a power supply source (not shown) to the heat treatment furnace 35, and the inner part of the quartz tube 31 was heated at 850°C for 1 hour by the heat treatment furnace 35.

The sulfur was vaporized by heating, and liquefaction of the vaporized sulfur was observed in the vicinity of the opening of the quartz tube, but reflux of the sulfur was not observed.

After completion of the heating, the quartz tube 31 was cooled, and the powder in the crucible was taken out and subjected to XRD measurement. As a result, little Y₂Ti₂O₅S₂ was observed, and Y₂Ti₂O₇ was mainly observed.

### Comparative Example 2

A reaction was performed in the same manner as in Example 2, except that the sulfur was not added and heating was performed at 850°C for 1 hour.

After completion of the heating, the quartz tube was cooled, and the powder in the crucible was taken out and subjected to XRD measurement. As a result, little Y₂Ti₂O₅S₂ was observed, and Y₂Ti₂O₇ was mainly observed.

## Claims

1. A method for producing Y₂Ti₂O₅S₂, comprising:
placing sulfur, Y₂O₃, TiO₂, Y₂S₃, and at least one flux selected from a halide of an alkali metal in a lower portion of a reaction vessel having an opening at an upper end;
then vaporizing the sulfur and allowing the vaporized sulfur to react with Y₂O₃, TiO₂, and Y₂S₃ to obtain Y₂Ti₂O₅S₂ by heating the lower portion of the reaction vessel in a state where the opening of the reaction vessel is held upward and closed while an upper portion of the reaction vessel is not heated; and
liquefying the vaporized sulfur in the upper portion of the reaction vessel to allow the liquefied sulfur to fall down and again vaporizing the liquefied sulfur in the heated lower portion of the reaction vessel, in which liquefaction and vaporization are repeatedly carried out, and allowing the vaporized sulfur to react with Y₂O₃, TiO₂, and Y₂S₃ to obtain Y₂Ti₂O₅S₂.

2. The production method according to claim 1, wherein the lower portion of the reaction vessel is heated and the upper portion of the reaction vessel is maintained at a temperature lower than a boiling point of the sulfur, whereby the vaporized sulfur is cooled and liquefied in the upper portion of the reaction vessel, and the liquefied sulfur spontaneously falls to the lower portion of the reaction vessel.

3. The production method according to claim 1 or 2, wherein a heating temperature is 600 to 1,100°C.

4. The production method according to any one of claims 1 to 3, wherein the sulfur is placed in the lower portion of the reaction vessel, while Y₂O₃, TiO₂, Y₂S₃ and the flux are mixed and provided in a starting material storage container, and the container is placed in the reaction vessel to perform the reaction.

5. The production method according to any one of claims 1 to 4, wherein the flux is at least one selected from NaCl, NaBr, NaI, KCl, KBr, KI, CsCl, CsBr, and CsI.
